Europäisches Patentamt

**European Patent Office**

Office européen des brevets

(11) Numéro de publication:

**0 058 123**

A2

(19)

(12)

# DEMANDE DE BREVET EUROPEEN

(21) Numéro de dépôt: **82400228.1**

(22) Date de dépôt: **09.02.82**

(51) Int. Cl.³: **F 16 L 19/02**
**F 16 L 25/00**

(30) Priorité: **11.02.81 FR 8102637**

(43) Date de publication de la demande:
**18.08.82 Bulletin 82/33**

(84) Etats contractants désignés:
**BE CH DE GB IT LI NL**

(71) Demandeur: **Monrocq, Raymond**
**c/o Société S.E.L.F.A. 62, rue de la Villette**
**F-75019 Paris(FR)**

(72) Inventeur: **Monrocq, Raymond**
**c/o Société S.E.L.F.A. 62, rue de la Villette**
**F-75019 Paris(FR)**

(74) Mandataire: **Armengaud, Alain**
**Cabinet Armengaud Ainé 3 Avenue Bugeaud**
**F 75116 Paris(FR)**

(54) Raccord, notamment pour vannes et robinets.

(57) Raccord pour tuyauteries, caractérisé en ce qu'il comprend: un embout mâle (10) et un embout femelle (18) présentant chacun une portée plane (28-30), ces portées étant conçues de façon à constituer le plan de raccordement, un joint torique d'étanchéité (32) étant positionné dans l'une desdites portées, et un écrou (24) conformé de façon à serrer l'un contre l'autre lesdits embouts en appliquant lesdites portées (28-30) l'une contre l'autre.

**Fig.1**

Croydon Printing Company Ltd.

1

## Raccord, notamment pour vannes et robinets

La présente invention est relative à un raccord pour tuyauteries, pouvant être appliqué à des vannes et à des robinets par exemple.

Les raccords actuellement connus comportent des éléments devant être emboîtés, et ils présentent donc l'inconvénient de nécessiter, pour leur mise en place ou leur démontage, d'écarter les éléments de tuyauterie à raccorder. Cet inconvénient est particulièrement gênant, notamment lorsqu'on effectue des raccordements de tuyauteries rigides fixes, et/ou lorsqu'on dispose d'une place insuffisante pour l'obtention du débattement nécessaire au montage ou au démontage du raccord.

La présente invention se propose d'apporter un raccord, notamment pour tuyauterie, ne présentant pas cet inconvénient.

A cet effet, elle vise un raccord caractérisé en ce qu'il comprend un embout mâle et un embout femelle présentant des portées planes conçues de façon à constituer le plan de raccordement du raccord, un joint torique d'étanchéité étant prévu dans l'une desdites portées, et un écrou venant se visser sur l'embout mâle, cet écrou étant conformé de façon à serrer l'un contre l'autre lesdits embouts en appliquant l'une contre l'autre les portées dont ils sont pourvus.

Selon une caractéristique de cette invention, ledit écrou vient se visser sur l'embout mâle, et l'embout femelle comporte un épaulement sur lequel vient appuyer, lors du serrage, un épaulement correspondant, prévu sur ledit écrou.

Selon une autre caractéristique de cette invention, les embouts mâle et femelle sont soudés sur les tuyauteries à raccorder.

L'invention vise également un robinet pourvu des raccords selon l'invention pour sa mise en place sur un circuit de distribution de fluide. Ce robinet est caractérisé en ce que ses extrémités d'admission et d'échappement sont réalisées de façon à constituer les embouts mâles du raccord tel que spécifié ci-dessus, l'écrou de chaque raccord venant se visser sur un filetage prévu à cet effet sur les deux extrémités du robinet.

D'autres caractéristiques de cette invention ressortiront de la description faite ci-après, en référence au dessin annexé, qui en illustre un exemple de réalisation et un exemple d'application, tous deux dépourvus de caractère limitatif. Sur le dessin :

- la Figure 1 est une vue en coupe axiale d'un raccord selon cette invention ; et,

- la Figure 2 est une vue, en coupe axiale verticale, d'un robinet pourvu de raccords selon la Figure 1.

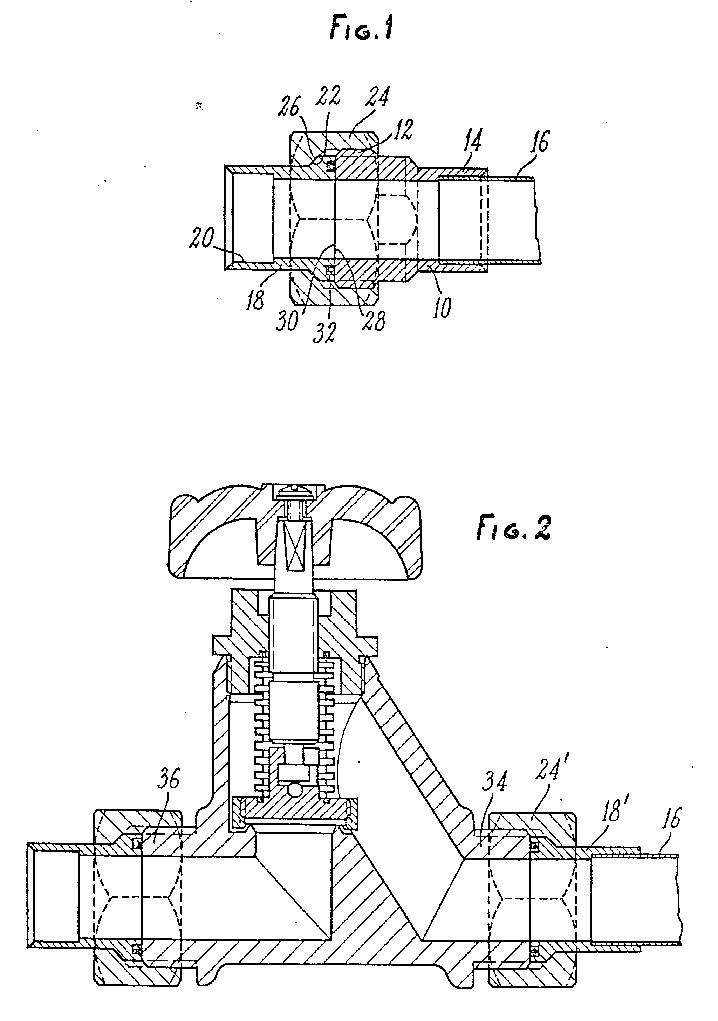

En se référant à la Figure 1, on voit que le raccord selon cette invention comprend essentiellement trois parties :

- un embout mâle 10, comportant une partie extérieure filetée 12 et une partie tubulaire 14 dans laquelle vient se fixer , de préférence par soudure, la première tuyauterie à raccorder 16 ;

- un embout femelle 18, comportant une partie tubulaire 20 dans laquelle vient se fixer, de préférence par soudure, la seconde tuyauterie à raccorder ( non représentée). Cet embout femelle comporte un épaulement 22, dont le rôle·sera précisé plus loin ;

- un écrou 24, venant se visser sur le filetage 12 de l'embout mâle 10, cet écrou étant pourvu d'un épaulement interne 26 coopérant avec l'épaulement 22 de l'embout femelle, comme on le verra ci-après.

On voit que les deux embouts 10-18 comportent des portées 28-30, respectivement, qui constituent le plan de raccordement de ce raccord, l'étanchéité à ce niveau étant assurée par un joint torique 32, positionné dans une gorge ménagée dans la portée 30 de l'embout femelle 18.

Le fonctionnement de ce raccord est le suivant.

Sans déplacer les tuyauteries à raccorder, pourvues respectivement des embouts 10 et 18, il suffit de visser l'écrou 24 sur l'embout mâle 10, l'épaulement 26 de l'écrou venant appuyer sur l'épaulement 22 de l'embout femelle 18. A la fin de ce serrage, les deux portées 28 et 30 sont appliquées l'une contre l'autre, comme représenté sur le dessin, et le joint torique assure l'étanchéité.

La Figure 2 illustre l'application d'un raccord, telle que décrit ci-dessus en référence à la Figure 1, à un robinet.

4

Sur cette Figure, on voit que l'extrémité 34 du robinet est conçue de façon à constituer l'embout mâle du raccord, similaire à l'embout 10 (Figure 1), l'embout femelle 18' étant par ailleurs identique à l'embout femelle 18 du raccord représenté sur la Figure 1. L'écrou 24' vient donc se visser sur l'extrémité filetée 34 pour assurer la liaison avec la tuyauterie 16. Bien entendu, on retrouve la même disposition sur l'autre extrémité 36 du robinet.

L'examen de cette Figure 2 montre l'avantage apporté par l'invention par rapport aux autres types de raccords actuellement connus. On voit en effet que le montage et le démontage du robinet s'effectuent sans déplacement des tuyauteries, telles que 16.

Il demeure bien entendu que cette invention n'est pas limitée aux exemples de réalisation et d'application donnés ici, mais qu'elle en englobe toutes les variantes.

Revendications de brevet

1. Raccord pour tuyauteries, caractérisé en ce qu'il comprend : un embout mâle (10) et un embout femelle (18) présentant chacun une portée plane (28-30), ces portées étant conçues de façon à constituer le plan de raccordement, un joint torique d'étanchéité (32) étant positionné dans l'une desdites portées, et un écrou (24) conformé de façon à serrer l'un contre l'autre lesdits embouts en appliquant lesdites portées (28-30) l'une contre l'autre.

2. Raccord selon la revendication 1, caractérisé en ce que ledit écrou (24) vient se visser sur l'embout mâle (10), et en ce que l'embout femelle (18) comporte un épaulement (22) sur lequel vient appuyer, lors du serrage, un épaulement correspondant (26), prévu sur ledit écrou (24).

3. Raccord selon l'une des revendications 1 ou 2, caractérisé en ce que les embouts mâle et femelle sont soudés sur les tuyauteries à raccorder.

4. Robinet pourvu de raccords, selon l'une quelconque des revendications précédentes, pour sa mise en place sur un circuit de distribution de fluide, caractérisé en ce que ses extrémités d'admission et d'évacuation ((34-36) sont réalisées de façon à constituer les embouts mâles desdits raccords, l'écrou (24') de chaque raccord venant se visser sur un filetage prévu à cet effet sur chacune desdites extrémités du robinet.

Fig.1

Fig.2